# EUROPÄISCHE PATENTSCHRIFT

(11) **EP 1 699 550 B1**
(45) Veröffentlichungstag und Bekanntmachung des Hinweises auf die Patenterteilung: **20.02.2013**
(21) Anmeldenummer: 04804130.5
(22) Anmeldetag: 21.12.2004
(51) Int. Cl.: B01J 8/02

(54) **VERFAHREN ZUR ÜBERWACHUNG, STEUERUNG UND/ODER REGELUNG VON REAKTIONEN EINES FLUIDEN REAKTIONSGEMISCHES IN EINEM REAKTOR MIT THERMOBLECHPLATTEN**
METHOD FOR MONITORING, CONTROLLING AND/OR REGULATING THE REACTIONS OF A FLUIDIC REACTION MIXTURE IN A REACTOR USING THERMAL SHEET METAL PLATES
PROCEDE POUR SURVEILLER, PILOTER ET/OU REGULER LES REACTIONS D'UN MELANGE REACTIONNEL FLUIDIQUE DANS UN REACTEUR AU MOYEN DE PLAQUES EN TOLE THERMIQUE

(30) Priorität: 23.12.2003 US 531678 P; 23.12.2003 DE 10361515
(43) Veröffentlichungstag der Anmeldung: 13.09.2006
(73) Patentinhaber: BASF SE, 67056 Ludwigshafen (DE)
(72) Erfinder: OLBERT, Gerhard, 69221 Dossenheim (DE); HECHLER, Claus, 67063 Ludwigshafen (DE); LÖWEN, Dietmar, 66987 Thaleischweiler-Fröschen (DE)
(86) Internationale Anmeldenummer: PCT/EP2004/014532
(87) Internationale Veröffentlichungsnummer: WO 2005/063374

(56) Entgegenhaltungen:
- DE-A1- 10 110 847
- DE-C1- 19 754 185

## Beschreibung

Die Erfindung betrifft ein Verfahren zur Überwachung, Steuerung und/oder Regelung von Reaktionen eines fluiden Reaktionsgemisches in einem Reaktor mit Thermoblechplatten sowie eine Vorrichtung zur Durchführung des Verfahrens.

In der chemischen Verfahrenstechnik sind eine Vielzahl von Reaktionen, insbesondere auch Partialoxidationsreaktionen fluider, das heißt gasförmiger, flüssiger oder gasförmig/flüssiger Reaktionsgemische bekannt, die in Gegenwart von heterogenen partikelförmigen Katalysatoren durchgeführt werden. Derartige Umsetzungen sind in der Regel exotherm, häufig stark exotherm. Sie wurden bislang im großtechnischen Maßstab überwiegend in Rohrbündelreaktoren durchgeführt, mit Kontaktrohren, in denen der heterogene partikelförmige Katalysator eingebracht ist und durch die das fluide Reaktionsgemisch geleitet wird und wobei die freiwerdende Reaktionswärme indirekt, über einen Wärmeträger abgeführt wird, der im Zwischenraum zwischen den Kontaktrohren zirkuliert. Als Wärmeträger wird häufig eine Salzschmelze eingesetzt.

Alternativ ist es auch möglich, die Reaktionswärme über einen Wärmeträger abzuführen, der durch plattenförmige Wärmeübertrager geleitet wird. Für plattenförmige Wärmeübertrager werden die Begriffe Wärmetauscherplatten, Wärmeübertragerplatten, Thermobleche, Thermoplatten oder Thermoblechplatten weitgehend synonym verwendet.

Wärmeübertragerplatten werden überwiegend als flächenförmige Gebilde definiert, die einen mit Zu- und Abführleitungen versehenen Innenraum mit geringer Dicke im Verhältnis zur Fläche aufweisen. Sie werden in der Regel aus Blechen, häufig aus Stahlblechen, hergestellt. Je nach Anwendungsfall, insbesondere den Eigenschaften des Reaktionsmediums sowie des Wärmeträgers, können jedoch spezielle, insbesondere korrosionsfeste, aber auch beschichtete Werkstoffe zum Einsatz kommen. Die Zu- bzw. Abführeinrichtungen für die Wärmeträger sind in der Regel an einander entgegengesetzten Enden der Wärmetauschplatten angeordnet. Als Wärmeträger kommen häufig Wasser, aber auch Diphyl® (Gemisch aus 70 bis 75 Gew.-% Diphenylether und 25 bis 30 Gew.-% Diphenyl) zum Einsatz, welche auch teilweise in einem Siedevorgang verdampfen; es ist auch der Einsatz anderer organischer Wärmeträger mit niedrigem Dampfdruck und auch ionischer Flüssigkeiten möglich.

Die Verwendung ionischer Flüssigkeiten als Wärmeträger ist in der DE-A 103 16 418 beschrieben. Bevorzugt sind ionische Flüssigkeiten, die ein Sulfat-, Phosphat-, Borat- oder Silikatanion enthalten. Besonders geeignet sind auch ionische Flüssigkeiten, die ein einwertiges MetallKation, insbesondere ein Alkalimetall-Kation, sowie ein weiteres Kation, insbesondere ein Imidazolium-Kation, enthalten. Vorteilhaft sind auch ionische Flüssigkeiten, die als Kation ein Imidazolium-, Pyridinium- oder Phosphonium-Kation enthalten.

Der Begriff Thermobleche oder Thermoblechplatten wird insbesondere für Wärmeübertragerplatten verwendet, deren einzelne, meistens zwei, Bleche durch Punkt- und/oder Rollschweißungen miteinander verbunden und häufig unter Verwendung hydraulischen Drucks plastisch unter Kissenbildung ausgeformt sind.

Die Begriffe Wärmetauscherplatte, Wärmeübertragerplatte, Thermobleche, Thermoplatte oder Thermoblechplatte werden vorliegend im Sinne der obigen Definition verwendet.

Reaktoren zur Durchführung von Partialoxidationen unter Verwendung von Thermoblechen sind beispielsweise aus DE-A 199 52 964 bekannt. Beschrieben ist die Anordnung eines Katalysators zur Durchführung von Partialoxidationen in einer Schüttung um Wärmeübertragerplatten in einem Reaktor. Das Reaktionsgemisch wird an einem Reaktorende dem Reaktorinnenraum zwischen den Wärmeübertragerplatten zugeführt und am entgegengesetzten Ende abgeführt und durchströmt somit den Zwischenraum zwischen den Wärmeübertragerplatten.

Die DE-C 197 54 185 beschreibt einen weiteren Reaktor mit indirekter Wärmeabführung über ein Kühlmedium, das durch Wärmeübertragerplatten strömt, wobei die Wärmeübertragerplatten als Thermobleche ausgebildet sind, die aus zumindest zwei Blechplatten aus Stahl bestehen, die an vorgegebenen Punkten unter Bildung von Strömungskanälen zusammengefügt sind.

Eine vorteilhafte Weiterbildung hiervon ist in DE-A 198 48 208 beschrieben, wonach Wärmeübertragerplatten, die als von einem Kühlmedium durchströmte Thermobleche ausgebildet sind, zu Plattenpaketen mit beispielsweise rechteckigem oder quadratischem Querschnitt zusammengefasst sind und die Plattenpakete eine so genannte Einhausung aufweisen. Das eingehauste Plattenpaket ist umfangseitig anpassungsfrei und folglich mit vorgegebenen Abständen zu der Innenwand des zylindrischen Reaktorbehälters eingesetzt. Die Freiflächen zwischen dem Plattenwärmeübertrager bzw. seiner Einhausung und der Behälterinnenwand sind im oberen und unteren Bereich der Einhausung mit Leitblechen abgedeckt, um den Bypass von Reaktionsmedium um die mit Katalysator gefüllten Kammern zu vermeiden.

Ein weiterer Reaktor mit Einrichtungen zur Abführung der Reaktionswärme in Form von Plattenwärmeübertragern ist in WO-A 01/85331 beschrieben. Der Reaktor von überwiegend zylindrischer Form enthält ein zusammenhängendes Katalysatorbett, in das ein Plattenwärmeübertrager eingebettet ist.

Aus DE-A 103 33 866 ist es bekannt, Probleme, die sich durch Deformationen aufgrund einseitiger hoher Belastung der Thermobleche bei zu großem Druckunterschied zwischen dem Reaktionsgemisch und der äußeren Umgebung ergeben, sowie mechanische Stabilitätsprobleme durch Verformung unter starker thermischer Beanspruchung, die auftreten können, wenn das Reaktionsgemisch unter Überdruck oder Unterdruck steht, zu vermeiden, indem ein Reaktor für Partialoxidationen eines fluiden Reaktionsgemisches in Gegenwart eines heterogenen partikelförmigen Katalysators zur Verfügung gestellt wird, mit
- einem oder mehreren quaderförmigen Thermoblechplattenmodulen, die jeweils aus zwei oder mehreren rechteckigen, parallel zueinander unter Freilassung jeweils eines Spaltes angeordneten Thermoblechplatten gebildet sind, der mit dem heterogenen partikelförmigen Katalysator befüllbar ist und der vom fluiden Reaktionsgemisch durchströmt wird, wobei die Reaktionswärme von einem Wärmeträger aufgenommen wird, der die Thermoblechplatten durchströmt und dabei zumindest teilweise verdampft, mit
- einer die Thermoblechplattenmodule druckentlastenden, dieselben vollständig umgebenden überwiegend zylinderförmigen Hülle, umfassend einen Zylindermantel und denselben an beiden Enden abschließenden Hauben und deren Längsachse parallel zur Ebene der Thermoblechplatten ausgerichtet ist, sowie mit
- einem oder mehreren Abdichtelementen, die dergestalt angeordnet sind, dass das fluide Reaktionsgemisch außer durch die von den Hauben begrenzten Reaktorinnenräume nur durch die Spalte strömt.

Es war demgegenüber Aufgabe der Erfindung, ein Verfahren zur Überwachung, Steuerung und/oder Regelung von Reaktionen eines fluiden Reaktionsgemisches zur Verfügung zu stellen, die in einem Reaktor mit darin angeordneten Thermoblechplatten durchgeführt werden, wobei ein heterogener partikelförmiger Katalysator in Spalten zwischen den Thermoblechplatten angeordnet ist und vom Reaktionsmedium durchströmt wird und wobei durch die Thermoblechplatten ein Wärmeträger strömt.

Entsprechend wurde ein Verfahren zur Überwachung, Steuerung und/oder Regelung von Reaktionen eines fluiden Reaktionsgemisches in Gegenwart eines heterogenen partikelförmigen Katalysators, in einem Reaktor mit zwei oder mehreren, vertikal, parallel zueinander unter Freilassung jeweils eines Spaltes angeordneten Thermoblechplatten gefunden, wobei in den Spalten der heterogene partikelförmige Katalysator eingebracht ist und das fluide Reaktionsgemisch durch die Spalte geleitet wird, das dadurch gekennzeichnet ist, dass man als Überwachungs-, Steuerungs- und/oder Regelgröße einen oder mehrere Temperaturwerte wählt, die man in einem oder mehreren Spalten, an einer oder mehreren Messstellen, die über die Höhe jedes Spaltes verteilt angeordnet sind, misst.

Aus Dokument DE-A 101 10 847 ist ein Messverfahren zur Überwachung und Steuerung von Reaktionen eines fluiden Reaktionsgemisches in den Kontaktrohren eines Rohrbündelreaktors bekannt. Wie in Dokument DE-A 101 10 847 dargelegt, besteht jedoch bei Rohrbündelreaktoren die Problematik, dass bei der üblichen Anordnung von Hülsen mit Messelementen in Kontaktrohren entlang der Längsachse derselben das Strömungs- und Temperaturprofil gegenüber Kontaktrohren ohne eingebaute Hülse stark verfälscht ist. Es wurde gefunden, dass insbesondere der Hot-Spot, der sich durch das parabolische Strömungs- und Temperaturprofil im Zentrum des Rohres ausbildet, nicht erfasst wird.

Entsprechend wurde ein Verfahren zur Überwachung, Steuerung und/oder Regelung von Reaktionen eines fluiden Reaktionsgemisches in Gegenwart eines heterogenen partikelförmigen Katalysators, in einem Reaktor mit zwei oder mehreren, vertikal, parallel zueinander unter Freilassung jeweils eines Spaltes angeordneten Thermoblechplatten gefunden, wobei in den Spalten der heterogene partikelförmige Katalysator eingebracht ist und das fluide Reaktionsgemisch durch die Spalte geleitet wird, das dadurch gekennzeichnet ist, dass man als Überwachungs-, Steuerungs- und/oder Regelgröße einen oder mehrere Temperaturwerte wählt, die man in einem oder mehreren Spalten, an 5 bis 60 Messstellen eines Temperaturmesseinsatzes, die über die Höhe jedes Spaltes verteilt angeordnet sind, misst, wobei der Temperaturmesseinsatz in einer Hülse im Spalt angeordnet ist, die außerhalb des Reaktors mündet..

Erfindungsgemäß wählt man als Überwachungs-, Steuerungs- und/oder Regelgröße einen oder mehrere Temperaturwerte, die man in einem oder mehreren Spalten, an einer oder mehreren Messstellen, die über die Höhe jedes Spaltes verteilt angeordnet sind, erfasst.

Vorzugsweise wählt man zusätzlich als weitere Überwachungs-, Steuerungs- und/oder Regelgröße die Zusammensetzung des fluiden Reaktionsgemisches in einem oder mehreren Spalten, die man an einer oder mehreren Messstellen, die über die Höhe jedes Spaltes verteilt angeordnet sind, bestimmt.

Für die Bestimmung der Betriebsbedingungen von Reaktoren ist die Kenntnis des Temperaturfelds im Katalysatorbett von wesentlicher Bedeutung. Dies betrifft die örtliche Verteilung der Temperatur, wie auch zum Beispiel die Höhe und Lage des Temperaturmaximums (Hot-Spot). Auch der Temperaturverlauf entlang des Strömungsweges des Reaktionsmediums kann für die Steuerung und Regelung des Reaktionssystems wesentlich sein.

Neben dem stationären Betrieb müssen auch das An- oder Abfahren oder etwa zeitlich veränderlich Rahmenbedingungen des Betriebs auch über längere Zeiträume zum Beispiel eine Veränderung der Katalysatoraktivität (Desaktivierung) beherrscht werden. Auf Grundlage gemessener Temperaturen kann zum Beispiel ein sicherer Betrieb gewährleistet, aber auch der jeweils bevorzugte, optimale Betriebszustand angesteuert und aufrechterhalten werden. Es sind Rückschlüsse auf die günstigste Betriebsweise zum Beispiel bezüglich Eduktzusammensetzung und Eduktmengenstrom, aber auch Kühltemperatur und Kühlmediumdurchsatz möglich. Darüber hinaus kann durch zusätzliche Konzentrationsmessung in der Katalysatorschüttung der stoffliche Verlauf der Reaktion verfolgt werden und zum Beispiel auch die Reaktionskinetik unter Betriebsbedingungen bestimmt werden. Beispielsweise kann auch das Desaktivierungsverhalwacht, gesteuert und/oder geregelt werden können, gibt es grundsätzlich keine Einschränkungen. Bevorzugt handelt es sich hierbei um Reaktionen gasförmiger Reaktionsgemische, insbesondere um Oxidations- oder Partialoxidationsreaktionen.

Reaktoren mit Thermoblechplatten wurden bereits vorstehend beschrieben.

Die Thermoblechplatten sind aus vorzugsweise korrosionsfreien Werkstoffen, insbesondere aus Edelstahl, beispielsweise mit der Werkstoffnummer 1.4541 bzw. 1.4404, 1.4571 bzw. 1.4406, 1.4539 aber auch 1.4547 und 1.4301 oder aus anderen legierten Stählen, gefertigt.

Die Materialstärke der hierfür eingesetzten Bleche kann zwischen 1 und 4 mm, 1,5 und 3 mm, aber auch zwischen 2 und 2,5 mm, oder zu 2,5 mm gewählt werden.

In der Regel werden zwei rechteckige Bleche an ihren Längs- und Stirnseiten zu einer Thermoblechplatte verbunden, wobei eine Rollnaht oder seitliches Zuschweißen oder eine Kombination von beidem möglich ist, so dass der Raum, in dem sich später der Wärmeträger befindet, allseitig dicht ist. Vorteilhaft wird der Rand der Thermoblechplatten an oder schon in der seitlichen Rollnaht der Längskante abgetrennt, damit der schlecht oder nicht gekühlte Randbereich, in dem meist auch Katalysator eingebracht ist, eine möglichst geringe geometrische Ausdehnung hat.

Über die Rechteckfläche verteilt werden die Bleche miteinander durch Punktschweißung verbunden. Auch eine zumindest teilweise Verbindung durch gerade oder auch gebogene und auch kreisförmige Rollnähte ist möglich. Auch die Unterteilung des vom Wärmeträger durchströmten. Volumens in mehrere getrennte Bereiche durch zusätzliche Rollnähte ist möglich.

Eine Möglichkeit der Anordnung der Schweißpunkte auf den Thermoblechplatten ist in Reihen mit äquidistanten Punktabständen von 30 bis 80 mm oder auch 35 bis 70 mm, wobei auch Abstände von 40 bis 60 mm möglich sind, wobei eine weitere Ausführungsform Abstände von 45 bis 50 mm und auch 46 bis 48 mm ist. Typischerweise variieren die Punktabstände fertigungsbedingt bis zu ± 1 mm und die Schweißpunkte unmittelbar benachbarter Reihen sind in Längsrichtung der Platten gesehen, jeweils um einen halben Schweißpunktabstand versetzt angeordnet. Die Reihen der Punktschweißungen in Längsrichtung der Platten können äquidistant mit Abständen von 5 bis 50 mm, aber auch von 8 bis 25 mm, wobei auch Abstände von 10 bis 20 mm und auch 12 bis 14 mm, eingesetzt werden. Weiterhin sind auch dem Anwendungsfall angepasste Paarungen der genannten Schweißpunktabstände und Reihenabstände möglich. Die Reihenabstände können in einem definierten geometrischen Zusammenhang zum Punktabstand, typisch ¼ der Punktabstände oder etwas geringer sein, so dass sich eine definiert gleichmäßige Aufweitung der Thermobleche bei der Herstellung ergibt. Den vorgegebenen Schweißpunkt- und Reihenabständen ist eine definierte Anzahl von Schweißpunkten je Plattenoberflächeneinheit zugeordnet, mögliche Werte sind 200 bis 3000, typische Werte 1400 bis 2600 Schweißpunkte je m² Plattenoberfläche. Vorteilhaft liegen 20 bis 35 Schweißpunkte in einem rechteckigen Oberflächenteilbereich von 5 x Schweißpunktabstand und 5 x Reihenabstand.

Die Breite der Thermoblechplatten ist im Wesentlichen fertigungstechnisch begrenzt und kann zwischen 100 und 2500 mm, oder auch zwischen 500 und 1500 mm, liegen. Die Länge der Thermoblechplatten ist abhängig von der Reaktion, insbesondere vom Temperaturprofil der Reaktion, und kann zwischen 500 und 7000 mm, oder auch zwischen 3000 und 4000 mm liegen.

Jeweils zwei oder mehrere Thermoblechplatten sind parallel und beabstandet zueinander, unter Bildung eines Thermoblechplattenmodules, angeordnet. Dadurch entstehen zwischen unmittelbar benachbarten Blechplatten schachtartige Spalte, die an den engsten Stellen des Plattenabstandes beispielsweise eine Breite zwischen 8 und 150 mm, aber auch 10 bis 100 mm aufweisen. Eine mögliche Ausführung sind auch Breiten von 12 bis 50 mm oder aber 14 bis 25 mm, wobei auch 16 bis 20 mm gewählt werden können. Es wurde auch schon ein Spaltabstand von 17 mm erprobt.

Zwischen den einzelnen Thermoblechplatten eines Thermoblechplattenmodules können, z.B. bei großflächigen Platten, zusätzlich Distanzhalter eingebaut werden, um Verformungen vorzubeugen, welche Plattenabstand oder -position verändern können. Zum Einbau dieser Distanzhalter können Teilbereiche der Bleche durch zum Beispiel kreisförmige Rollnähte oder Schweißpunkte größeren Durchmessers vom Durchflussbereich des Wärmeträgers abgetrennt werden, um in deren Mitte dort beispielsweise Löcher für stabförmige Distanzhalter, die verschraubt oder verschweißt sein können, in die Platten einbringen zu können.

Die Spalte zwischen den einzelnen Platten können gleichen Abstand besitzen, bei Erfordernis können die Spalte aber auch unterschiedlich breit sein, wenn die Reaktion dies zulässt oder die gewünschte Reaktion es erfordert, oder apparative oder kühltechnische Vorteile erzielt werden können.

Die mit Katalysatorpartikeln gefüllten Spalte eines Thermoblechplattenmodules können gegeneinander gedichtet, z.B. dichtgeschweißt sein oder auch prozessseitig zueinander Verbindung besitzen.

Zur Einstellung des gewünschten Spaltabstandes beim Zusammenfügen der einzelnen Thermoblechplatten zu einem Modul werden die Platten in ihrer Position und im Abstand fixiert.

Die Schweißpunkte unmittelbar benachbarter Thermoblechplatten können sich gegenüberliegen oder versetzt zueinander sein.

Gegenstand der Erfindung ist weiterhin eine Vorrichtung zur Durchführung des vorstehend beschriebenen Verfahrens, gekennzeichnet durch eine Hülse, die im Spalt zwischen zwei Thermoblechplatten, vorzugsweise in Längsrichtung angeordnet ist und außerhalb des Reaktors mündet und die einen Temperaturmesseinsatz, zum Beispiel ein oder mehrere Thermoelemente mit einer oder mehrerer Messstellen umhüllt.

Vorzugsweise sind die Thermoblechplatten in
- einem oder mehreren quaderförmigen Thermoblechplattenmodulen angeordnet, die jeweils aus zwei oder mehreren rechteckigen, parallel zueinander unter Freilassung jeweils eines Spaltes angeordneten Thermoblechplatten gebildet sind, wobei
- die Thermoblechplattenmodule mit einer druckentlastenden, überwiegend zylinderförmigen Hülle, umfassend einen Zylindermantel und denselben an beiden Enden abschließenden Hauben und deren Längsachse parallel zur Ebene der Thermoblechplatten ausgerichtet ist, vollständig umgeben sind, wobei
- ein oder mehrere Abdichtelemente dergestalt angeordnet sind, dass das fluide Reaktionsgemisch außer durch die von den Hauben begrenzten Reaktorinnenräume nur durch die Spalte strömt und wobei
- jedes Thermoblechplattenmodul mit einem oder mehreren voneinander unabhängigen Temperaturmesseinsätzen, bevorzugt mit zwei oder drei, besonders bevorzugt mit drei Temperaturmesseinsätzen ausgestattet ist.

Indem jedes Thermoblechplattenmodul mit jeweils mindestens einem unabhängigen Temperaturmesseinsatz ausgestattet ist, kann jedes Thermoblechplattenmodul einzeln beurteilt und überwacht werden. Vorteilhaft ist es, für jedes Thermoblechplattenmodul mehr als einen Temperaturmesseinsatz vorzusehen, so dass bei Ausfall eines einzelnen Temperaturmesseinsatzes dennoch der sichere Betrieb gewährleistet ist. Beim Einsatz von jeweils drei Temperaturmesseinsätzen pro Thermoblechplattenmodul ist es möglich, den sicheren Betrieb bei Prüfung, Wartung oder Ausfall eines Temperaturmesseinsatzes aufrechtzuerhalten, insbesondere auch dann, wenn die Temperatursignale funktionell in einer Schutzschaltung genutzt werden.

Die Hülse ist ein bevorzugt metallisches Rohr, insbesondere mit einem Außendurchmesser im Bereich von 4 bis 15, insbesondere von 6 bis 10 mm, häufig von 6 bis 8 mm und weiter bevorzugt mit einer Wandstärke von 0,8 bis 1,5 mm, bevorzugt von 1 mm. Es kommen für die Hülse prinzipiell die gleichen Werkstoffe in Frage, die für die Thermoblechplatten eingesetzt werden können, wobei Hülse und Thermoblechplatten nicht aus demselben Werkstoff sein müssen. Es können als Hülse auch Nicht-Eisen-Werkstoffe zum Einsatz kommen.

Bei Rohrbündelreaktoren ist es nach dem Stand der Technik erforderlich, beim Einsatz von Temperaturmesshülsen oder Temperaturmesseinsätzen in der Katalysatorschüttung speziell angefertigte Rohre mit vergrößertem Innendurchmesser zu verwenden, um in diesen Rohren einen mit den übrigen, normalen Reaktionsrohren gleichwertigen Reaktionsablauf und somit eine repräsentative Temperaturmessung zu ermöglichen.

Während es bei der üblichen Anordnung von Hülsen zur Aufnahme von Messelementen in Reaktionsrohren, zentrisch, in Längsachse derselben, zu einer starken Verfälschung des Strömungs- und Temperaturprofils gegenüber Reaktionsrohren ohne eingebaute Hülsen kommt, und daher besondere Ausgestaltungen des Reaktionsrohres, der Katalysatorfüllung und auch der Hülse, beispielsweise mit unterschiedlicher Wandstärke über ihrem Querschnitt oder besondere Anordnungen der Hülse im Kontaktrohr erforderlich sind, wie in DE-A 101 10 847 beschrieben, wurde überraschend gefunden, dass es bei Reaktoren mit Thermoblechplatten zur Messung des Temperaturprofils im Katalysatorbett in den Spalten zwischen den Thermoblechplatten derartiger spezieller Anordnungen nicht zwingend bedarf.

Es ist lediglich erforderlich, den Temperaturmesseinsatz selbst oder die Hülse, die den Temperaturmesseinsatz umhüllt, im Spalt, bevorzugt in Längsrichtung zwischen zwei Thermoblechplatten anzuordnen.

Der Abstand des Temperaturmesseinsatzes oder der Hülse zu den beiden Thermoblechplatten kann dabei vorzugsweise jeweils gleich sein, das heißt der Temperaturmesseinsatz ist in einer Ausführungsform mittig im Spalt angeordnet.

Zur Einführung der Hülse in den Spalt zwischen den Thermoblechplatten ist es besonders vorteilhaft, wenn die Thermoblechplatten jeweils gleiche Schweißpunktmuster aufweisen und die Schweißpunkte benachbarter Thermoblechplatten einander gegenüberliegen.

Die Hülsen können außerhalb des Reaktors sowohl oberhalb als auch unterhalb desselben münden. In einer bevorzugten Ausführungsform ist es möglich, dass die Hülsen sowohl oberhalb als auch unterhalb des Reaktors münden. Dabei kann der Temperaturmesseinsatz kontinuierlich in der Hülse verschoben werden, so dass eine kontinuierliche Abbildung des Temperaturprofils bestimmt werden kann, nicht nur diskrete Temperaturmesswerte. Hierfür kann ein einzelnes Messelement, vorteilhaft aber auch ein Mehrfachmesselement, besonders vorteilhaft mit äquidistanten Messabständen verwendet werden, da der notwendige Verschiebeweg zur lückenlosen Messung des Temperaturprofils dann nur einen Messstellenabstand beträgt.

Die Hülsen können nahtlos durch die äußere Reaktorummantelung geführt werden oder auch Verbindungselemente im Bereich oberhalb der katalysatorgefüllten Thermoplattenmodule, bzw. bei Einführung von unten unterhalb der Thermoblechplattenmodule aufweisen. In einer besonders vorteilhaften Variante sind die Hülsen im Reaktorinnenraum mit Trennstellen versehen, die insbesondere als Schneid- oder Klemmringverbindung ausgeführt sind, so dass die Montage erheblich erleichtert ist.

Der Temperaturmesseinsatz weist in der Regel mehrere, über seine Länge und somit über die Höhe des Spaltes verteilt angeordnete Messstellen auf. Als Temperaturmesseinsätze kommen vorzugsweise Vielfach-Messeinsätze (so genannte Multithermoelemente) in Frage, es können aber auch alle anderen, insbesondere physikalischen Temperaturmessprinzipien wie Platin-Widerstandsthermometer, beispielsweise PT-100 oder PT-1000, Widerstandsthermometer oder Halbleitersensoren verwendet werden. Es kommen je nach Einsatztemperatur alle in DIN43710 und DIN EN 60584 beschriebenen Thermoelemente in Frage, vorzugsweise Thermoelemente des Typs K nach DIN EN 60584.

Die verteilt angeordneten Messstellen können äquidistant angeordnet sein, besonders vorteilhaft jedoch in Reaktorbereichen mit zu erwartendem Temperaturextrema und/oder besonders großer Temperaturgradienten mit geringerem Abstand zueinander und in den übrigen Reaktorbereichen mit größerem Abstand zueinander.

Vorteilhaft weist der Temperaturmesseinsatz 5 bis 60 Messstellen, bevorzugt 10 bis 50 Messstellen, besonders bevorzugt 15 bis 40 Messstellen und weiter bevorzugt 20 bis 30 Messstellen auf.

In einer bevorzugten Ausführungsform weist der Temperaturmesseinsatz 20 Messstellen und einen Außendurchmesser von etwa 3,8 mm auf, so dass der Temperaturmesseinsatz in einer Hülse mit einem Außendurchmesser von 6 mm oder von 1/4 Zoll und einem Innendurchmesser von 4 mm oder von 5/32 Zoll montiert werden kann.

In einer weiteren bevorzugten Ausführungsform weist der Temperaturmesseinsatz 40 Messstellen auf und einen Außendurchmesser von etwa 2,5 mm, so dass er in einer Hülse mit einem Außendurchmesser von 5 mm oder von 3/16 Zoll und einem Innendurchmesser von 3 mm oder von 1/8 Zoll montiert werden kann.

In einer Ausführungsform kann die Hülse, die das Thermoelement umhüllt, an der seitlichen Begrenzung des Spaltes zwischen zwei Thermoblechplatten angeordnet sein. Um eine Messverfälschung zu vermeiden, ist hierbei bevorzugt ein Isolierkörper zwischen der seitlichen Begrenzung des Spaltes und der Hülse vorzusehen, so dass auch am Rand der Schüttung ein repräsentatives Temperatursignal erfasst werden kann. Besonders vorteilhaft ist hierbei, dass die Hülse fest im Spalt eingebaut ist und bleiben kann und nicht zusammen mit der Katalysatorfüllung ein- bzw. ausgebaut werden muss. Die Hülse kann in diesem Fall auch mit nicht-zylindrischer Geometrie, beispielsweise mit einem Quadrat- oder Halbkreisquerschnitt ausgeführt sein.

Es ist darüber hinaus auch möglich, die Hülse, die den Temperaturmesseinsatz umhüllt, horizontal im Spalt zwischen zwei Thermoblechplatten anzuordnen. Dadurch kann der Temperaturverlauf über den Querschnitt des Spaltes bestimmt werden.

In einer weiteren, bevorzugten Ausführungsform der erfindungsgemäßen Vorrichtung ist zusätzlich zu der vorstehend beschriebenen Hülse mit Temperaturmessung in einem oder mehreren Spalten jeweils eine Hülse vorgesehen, die Perforationen aufweist sowie mindestens ein Probenahmeröhrchen zum Einführen in das Innere der Hülse, welches dort dergestalt angeordnet ist, dass das fluide Reaktionsgemisch über die Perforationen in der Hülse in das Innere des Probenahmeröhrchen einströmt und aus dem Probenahmeröhrchen nach außerhalb des Reaktors abgezogen und analysiert wird.

Als Hülse wird in der Regel ein metallisches Rohr, bevorzugt mit einem Außendurchmesser im Bereich von 5 bis 15, insbesondere von 8 bis 10 mm und einer Wandstärke von bevorzugt 1 mm, eingesetzt. Die Hülse weist erfindungsgemäß Perforationen auf, das heißt Öffnungen zum Reaktionsraum hin" wobei dieselben grundsätzlich bezüglich der geometrischen Form nicht eingeschränkt sind. Bevorzugt sind die Öffnungen jedoch kreisförmig ausgebildet. Insbesondere ist auch eine schlitzförmige Ausführung mit Anordnung der Schlitze in Längsrichtung des Probenahmeröhrchens, möglich. Die Perforationen weisen bevorzugt eine Gesamtoberfläche von 1 bis 50 %, bevorzugt von 1 bis 10 %, bezogen auf die gesamte Mantelfläche der Hülse auf. Sie dienen dazu, das fluide Reaktionsgemisch in die Hülse einströmen zu lassen, und somit in das im Innern der Hülse angeordnete Probenahmeröhrchen über die Öffnung desselben zu gelangen. Die aus dem Probenahmeröhrchen außerhalb des Reaktors abgezogene Probe kann zum Beispiel mit der vorhandenen Betriebsanalytik analysiert werden. Es ist gleichermaßen möglich, Proben kontinuierlich oder in bestimmten Zeitabständen abzuziehen und zu analysieren.

Das Entnehmen der Proben kann hierbei durch den Eigendruck des Reaktionssystems über ein Regelventil oder Überströmeinrichtung oder aber mittels einer Pumpe bzw. Verdichters oder eines Strahlers/Ejektors erfolgen, wobei die Probe in ein System mit Atmosphärendruck aber auch Unter- oder Überdruck zur Atmosphäre eingeleitet werden kann. Vorzugsweise ist das Analysesystem, in welches die Probe eingeleitet wird zur Erhöhung der Messgenauigkeit auf konstanten Druck eingeregelt.

In einer bevorzugten Ausgestaltung ist die perforierte Hülse mittig im Spalt angeordnet. Bei dieser Anordnung ist die Symmetrie des Strömungsbildes im Spalt besonders wenig gestört. Der Einbau kann hierbei vertikal von oben oder unten erfolgen, wobei der Einbau vorzugsweise von derselben Seite des Reaktors erfolgt, wie die Zuführung des fluiden Reaktionsgemisches.

In der Ausführungsvariante, in der sowohl der Einbau der Hülsen sowie die Zuführung des fluiden Reaktionsgemisches jeweils von oben in den Reaktor erfolgen, weisen die Hülsen vorteilhaft lediglich im oberen Bereich des Spaltes, insbesondere bis etwa zur Mitte desselben, mit Perforationen versehen. Da sich das Probenahmeröhrchen nur im oberen Bereich der Hülse, bis zu der Stelle, an der die Probe zwecks Bestimmung ihrer Zusammensetzung über die Öffnung aufgenommen wird, erstreckt, würde der darunter angeordnete, leere Bereich der Hülse ansonsten einen Bypass für das Reaktionsgemisch darstellen. Dies wird verhindert, indem Perforationen in der Hülse nur im oberen Bereich des Spaltes vorgesehen werden.

Analog ist es möglich, dass der Einbau der Hülsen sowie die Zuführung des fluiden Reaktionsgemisches in den Reaktor jeweils von unten erfolgen und dass bevorzugt durch die Thermoblechplatten ein Wärmeträger geleitet wird, der unter Reaktionsbedingungen partiell oder vollständig siedet.

Bevorzugt kann das Probenahmeröhrchen mit der Hülse fest verbunden sein, dergestalt, dass die Öffnung des Probenahmeröhrchens unmittelbar an einer Perforation der Hülse angeordnet ist, die Öffnungen von Probenahmeröhrchen und Hülse sich somit überlagern.

In einer weiteren bevorzugten Ausgestaltung ist das Probenahmeröhrchen drehbar in der perforierten Hülse angeordnet und weist mindestens zwei, über seine Mantelfläche versetzt angeordnete Öffnungen auf, dergestalt, dass das fluide Reaktionsgemisch stets nur über eine der Öffnungen in das Probenahmeröhrchen einströmt. Bevorzugt sind die Öffnungen des Probenahmeröhrchens als Schlitze in Längsrichtung desselben angeordnet, wodurch mehr Spielraum beim Anpassen der Öffnungen von Hülse und Probenahmeröhrchen zur Verfügung steht.

Durch diese Ausgestaltung können mittels eines einzigen Probenahmeröhrchens Proben von mehreren Stellen, die über die Höhe des Spaltes verteilt angeordnet sind, entnommen werden.

In einer weiteren bevorzugten Variante weist jedes Probenahmeröhrchen mindestens zwei, bevorzugt zwei bis vier voneinander getrennte Kammern auf, mit jeweils einer Öffnung, in die das fluide Reaktionsgemisch über die Perforationen der Hülse einströmt und wobei das fluide Reaktionsgemisch aus jeder Kammer getrennt abgezogen und analysiert wird. Die Kammern können dabei nebeneinander oder konzentrisch zueinander angeordnet sein.

Durch Ausbildung von zwei oder mehreren voneinander getrennten Kammern in den Probenahmeröhrchen wird die Zahl der Messstellen, an denen Proben des fluiden Reaktionsgemisches abgezogen werden können, erhöht.

Besonders bevorzugt ist die Ausführungsvariante, in der ein Probenahmeröhrchen mit mehreren Kammern vorgesehen ist, das zusätzlich um seine Längsachse drehbar angeordnet ist. Dadurch können für jede Kammer zwei oder mehrere, bevorzugt vier gegeneinander versetzte Schlitze zur Aufnahme des fluiden Reaktionsgemisches angeordnet sein, wobei das fluide Reaktionsgemisch in jede Kammer stets jeweils nur über eine Öffnung einströmt. Durch diese Ausgestaltung wird die Zahl der Messstellen für die Zusammensetzung des fluiden Reaktionsgemisches weiter erhöht.

In einer weiteren bevorzugten Ausführungsvariante sind zwei oder mehrere Probenahmeröhrchen vorgesehen, die jeweils mit der Hülse fest verbunden sind, dergestalt, dass die Öffnung jedes Probenahmeröhrchens unmittelbar an einer Perforation der Hülse angeordnet ist und wobei die einzelnen Probenahmeröhrchen auf jeweils unterschiedlicher Höhe im Spalt münden. Darüber hinaus, ist es auch möglich, die Hülse selbst als Probenahmeröhrchen auszugestalten, indem lediglich an den Stellen, an denen eine direkte Verbindung mit jeweils einem Probenahmeröhrchen besteht, Perforationen vorgesehen sind und darüber hinaus auf einer von der Mündung der Probenahmeröhrchen verschiedenen Stelle eine einzige weitere Perforation in der Hülse vorgesehen ist, über die fluides Reaktionsgemisch einströmt.

Durch das erfindungsgemäße Verfahren und die Vorrichtung ist somit eine genaue Kenntnis des tatsächlichen Reaktionsgeschehens und der realen Temperaturen, bevorzugt auch der für den Hot-Spot maßgeblichen Temperatur in einfacher Weise, unter Nutzung der vorhandenen Betriebsanalytik, möglich. Dadurch kann wesentlich näher an der Belastungsgrenze des Katalysators gefahren werden, der Katalysator kann somit besser ausgenutzt werden, wobei gleichzeitig Beschädigungen durch unerwünscht starke Hot Spot-Bildung vermieden werden. Weiterhin kann in Kenntnis des tatsächlichen Reaktionsgeschehens die Katalysatoraktivität räumlich im Spalt differenziert, angepasst an das tatsächliche Reaktionsgeschehen, ausgestaltet werden. Dadurch wird der Katalysator geschont, insbesondere in den thermisch stärker belasteten Bereichen, und somit seine Alterung im Sinne einer längeren oder vorteilhafteren Nutzung günstiger gestaltet.

Darüber hinaus kann der Reaktor wesentlich gleichförmiger betrieben werden, wodurch die Gesamtselektivität der darin stattfindenden Reaktionen positiv beeinflusst wird. Weiterhin kann durch Anpassung der Katalysatoraktivität an das tatsächliche Reaktionsgeschehen die benötigte Menge an Wärmeträger reduziert werden.

Die Erfindung wird im Folgenden anhand einer Zeichnung näher erläutert.

Es zeigen im Einzelnen:
- Figur 1: einen Ausschnitt aus einem Reaktor mit Thermoblechplatten mit mittig angeordneter Hülse zur Aufnahme eines Thermoelementes, im Längsschnitt, mit Querschnittsdarstellung in Figur 1A,
- Figur 2: einen Ausschnitt durch eine weitere Ausführungsform mit seitlich angeordneter Hülse, im Längsschnitt, mit Querschnittsdarstellung in Figur 2A,
- Figur 3: eine weitere Ausführungsform mit horizontal im Spalt angeordneter Hülse, im Längsschnitt, mit Querschnittsdarstellung in Figur 3A und Detaildarstellung in Figur 3B,
- Figur 4: einen Ausschnitt aus einer weiteren Ausführungsform mit einer Hülse mit Perforationen und Probenahmeröhrchen, im Längsschnitt, mit Querschnittsdarstellung in Figur 4A,
- Figur 5: die schematische Darstellung für den Einbau einer erfindungsgemäßen Hülse in ein Thermoblechplattenmodul und
- Figur 6: schematisch bevorzugte Schweißpunktverteilungen auf der Oberfläche von Thermoblechplatten.

In den Figuren bezeichnen gleiche Bezugszeichen gleiche oder entsprechende Merkmale.

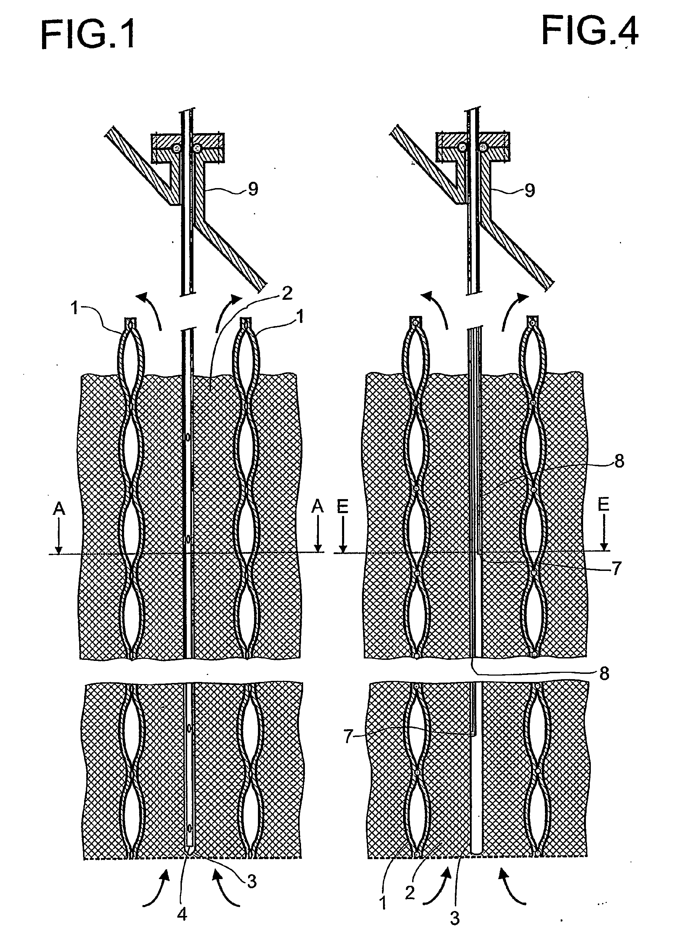

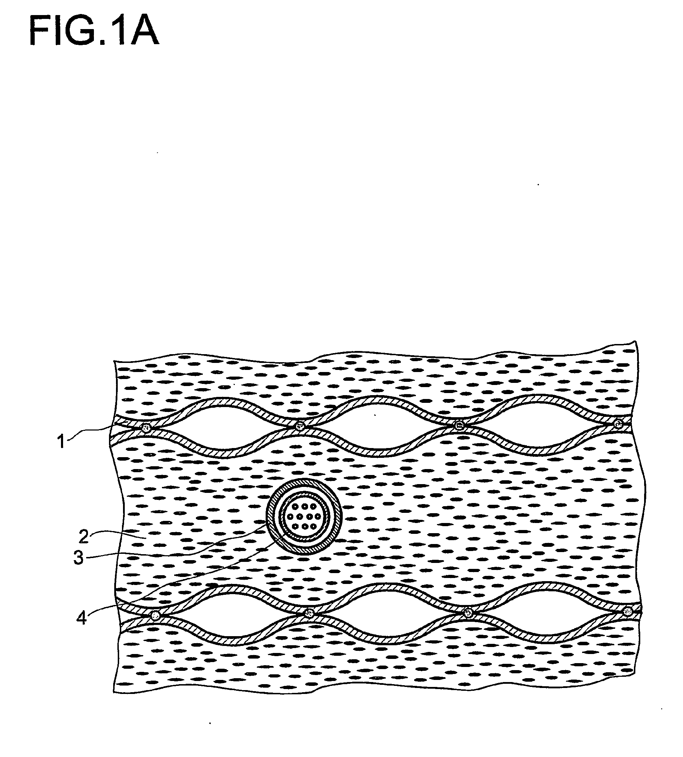

Figur 1 zeigt schematisch einen Ausschnitt aus einem Reaktor mit Thermoblechplatten 1 mit dazwischen angeordnetem Spalt 2, in den das Katalysatorfestbett eingebracht ist. Im Spalt 2 ist, in der dargestellten bevorzugten Ausführungsform, mittig eine Hülse 3 angeordnet, die ein Thermoelement 4 umhüllt, das beispielhaft 4 Messpunkte aufweist. Die Hülse 3 und das Thermoelement 4 ragen über einen Stutzen am Reaktormantel aus dem Reaktor heraus.

Die Querschnittsdarstellung in Figur 1A verdeutlicht die kreiszylindrische Geometrie der Hülse 3 mit darin angeordnetem Thermoelement 4.

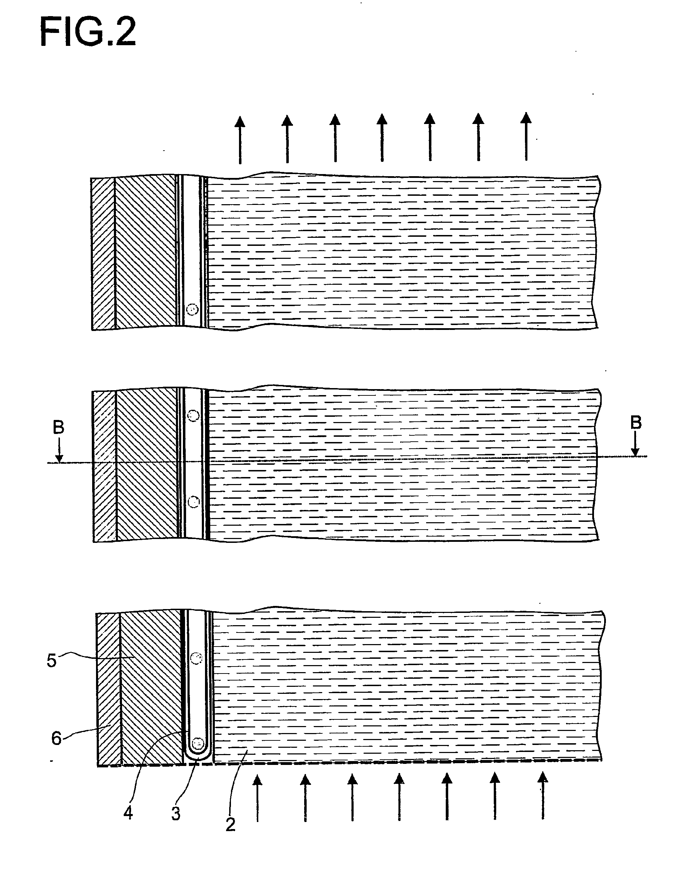

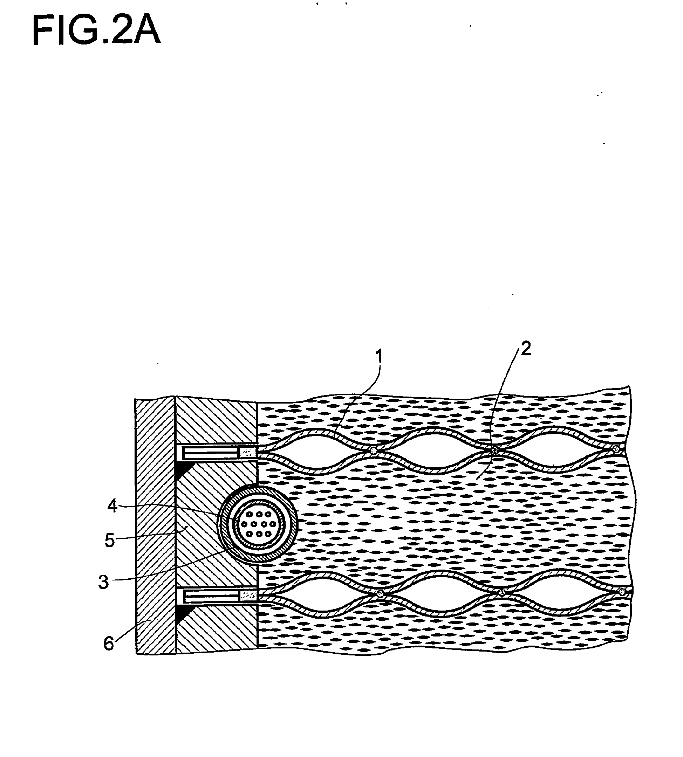

Die schematische Darstellung in Figur 2 zeigt einen Ausschnitt aus einem Reaktor in Längsrichtung, im Bereich eines Spaltes 2 zwischen zwei nicht dargestellten Thermoblechplatten. Im Spalt 2 ist, an der seitlichen Begrenzung 6 desselben, eine Hülse 3 mit Thermoelement 4 angeordnet. Zwischen Hülse 3 und seitlicher Begrenzung des Spaltes 2 ist eine Isolierkörper 5 vorgesehen.

Die Querschnittsdarstellung in Figur 2 verdeutlicht die Thermoblechplatten 1, einschließlich deren Befestigung an der seitlichen Begrenzung 6, sowie die kreiszylindrische Ausbildung der Hülse 3 mit Thermoelement 4 und formschlüssiger Ausbildung des Isolierkörpers 5.

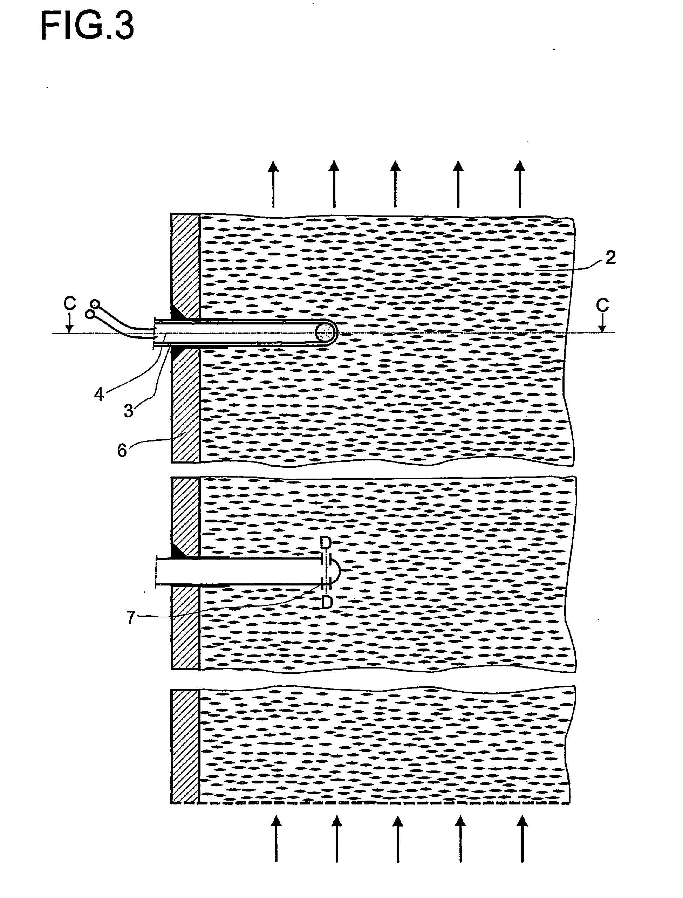

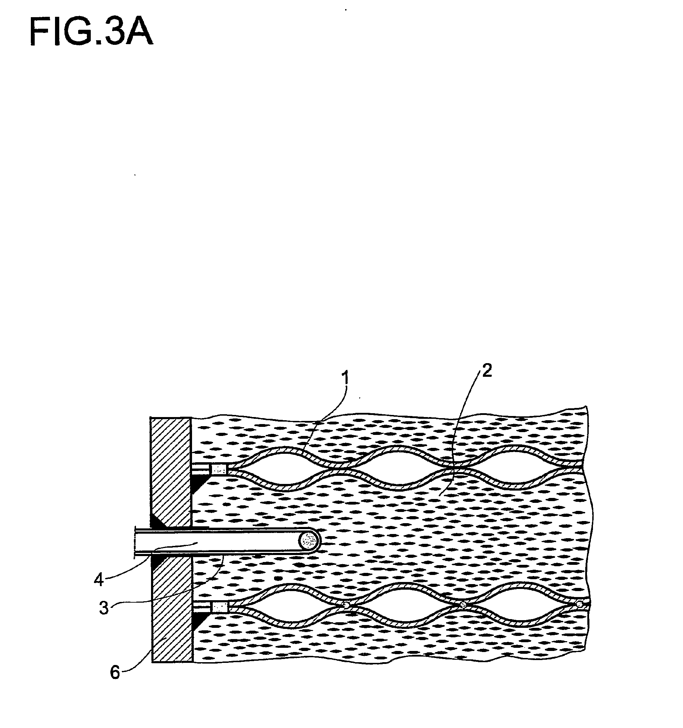

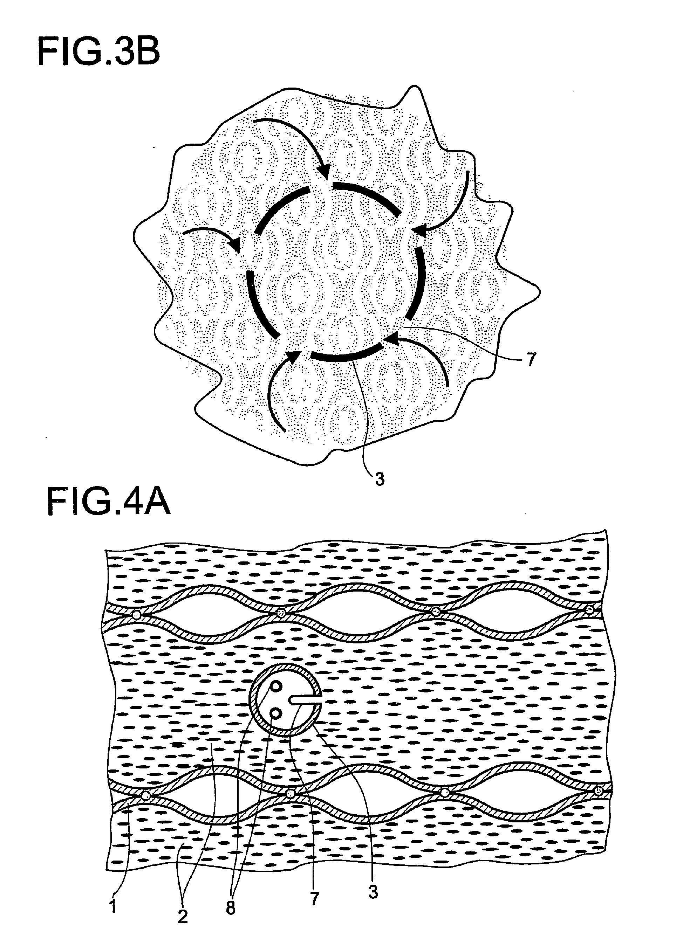

Figur 3 zeigt schematisch einen Ausschnitt aus einer weiteren Ausführungsform, mit horizontaler Anordnung einer Hülse 3 mit Thermoelement 4 in einem Spalt 2. Die Hülse weist in der Nähe ihres in den Spalt hineinragenden Endes Perforationen 7 auf, durch die Proben des Reaktionsgemisches abgezogen werden können.

Die schematische Darstellung in Figur 4 zeigt einen Längsschnitt durch eine weitere Ausführungsform mit einer Hülse 3 mit Perforationen 7 in der Hülse 3 zur Aufnahme von Proben in die Probenahmeröhrchen 8. Die Hülse 3 mit Probenahmeröhrchen 8 ragen über den Stutzen 9 aus dem Reaktor hinaus.

Die Querschnittsdarstellung in Figur 4A verdeutlicht die Ausgestältung der Hülse 3 im Querschnitt, mit Öffnung 7 und Probenahmeröhrchen 8.

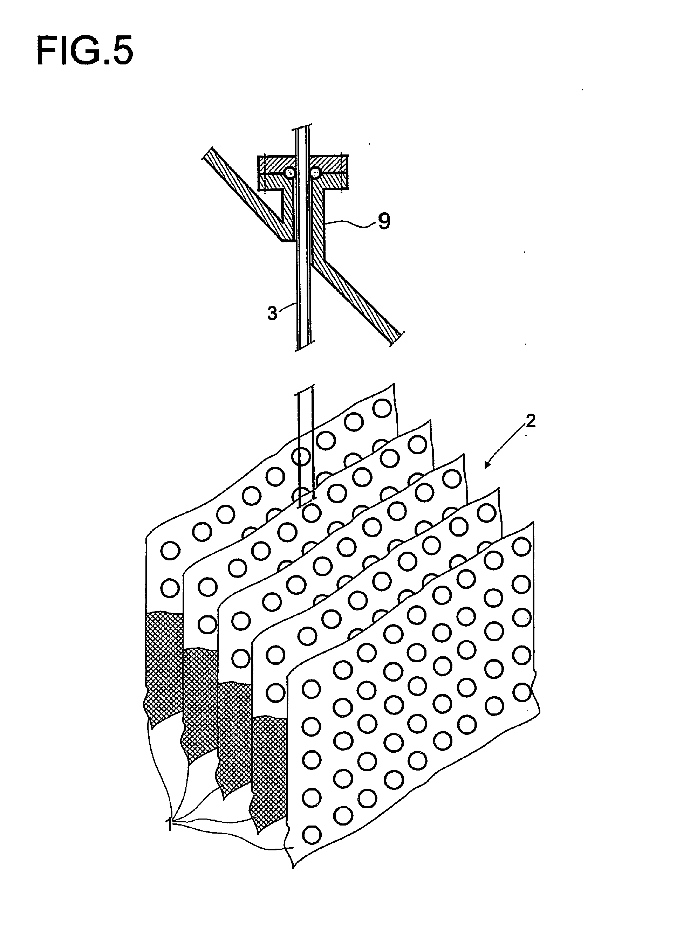

Figur 5 zeigt schematisch einen Ausschnitt aus einem Reaktor mit parallel angeordneten Thermoblechplatten 1, mit dazwischen liegenden Spalten 2. Beispielhaft ist eine Hülse 3 dargestellt, die in einen Spalt 2 zwischen zwei Thermoblechplatten 1, in Längsrichtung desselben, hineinragt, und die über einen Stutzen 9 am Reaktormantel außerhalb des Reaktors mündet.

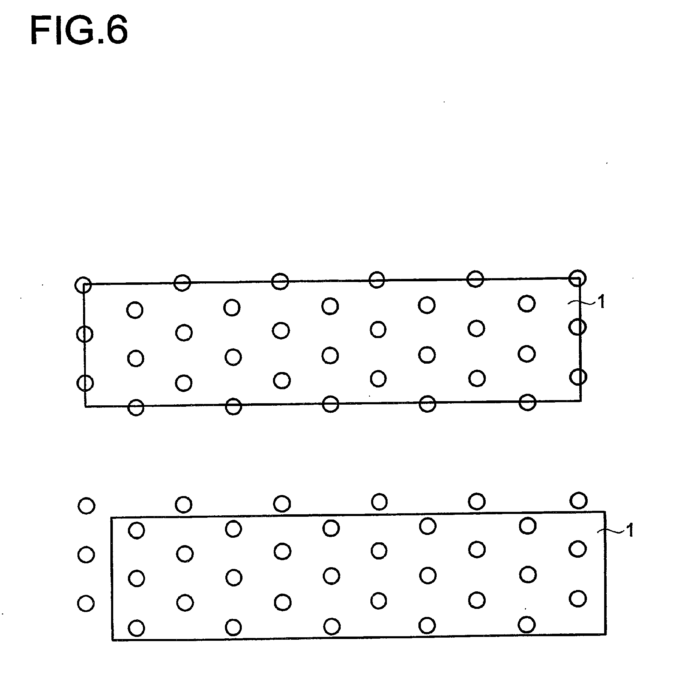

Figur 6 zeigt zwei bevorzugte Schweißpunktverteilungen auf der Oberfläche von Thermoblechplatten: dargestellt ist jeweils ein rechteckiger Oberflächenteilbereich einer Thermoblechplatte 1, entsprechend dem fünffachen Schweißpunktabstand auf der horizontalen Achse und dem fünffachen Reihenabstand auf der vertikalen Achse. Die obere Darstellung in Figur 6 zeigt eine bevorzugte Schweißpunktverteilung mit insgesamt 33 Schweißpunkten auf dem dargestellten Oberflächenteilbereich einer Thermoblechplatte 1 mit dem fünffachen Schweißpunktabstand und dem fünffachen Reihenabstand und die untere Darstellung eine weitere bevorzugte Anordnung mit 25 Schweißpunkten auf einem Oberflächenteilbereich gleicher Abmessung.

## Patentansprüche

1. Verfahren zur Überwachung, Steuerung und/oder Regelung von Reaktionen eines fluiden Reaktionsgemisches in Gegenwart eines heterogenen partikelförmigen Katalysators, in einem Reaktor mit zwei oder mehreren, vertikal, parallel zueinander unter Freilassung jeweils eines Spaltes (2) angeordneten Thermoblechplatten (1), wobei in den Spalten (2) der heterogene partikelförmige Katalysator eingebracht ist und das fluide Reaktionsgemisch durch die Spalte (2) geleitet wird, **dadurch gekennzeichnet, dass** man als Überwachungs-, Steuerungs- und/oder Regelgröße einen oder mehrere Temperaturwerte wählt, die man in einem oder mehreren Spalten (2), an 5 bis 60 Messstellen eines Temperaturmesseinsatzes (4), die über die Höhe jedes Spaltes (2) verteilt angeordnet sind, misst, wobei der Temperaturmesseinsatz (4) in einer Hülse (3) im Spalt (2) angeordnet ist, die außerhalb des Reaktors mündet.

2. Verfahren nach Anspruch 1, **dadurch gekennzeichnet, dass** man als weitere Überwachungs-, Steuerungs- und/oder Regelgröße die Zusammensetzung des fluiden Reaktionsgemisches in einem oder mehreren Spalten (2) wählt, die man an einer oder mehreren Messstellen, die über die Höhe jedes Spaltes (2) verteilt angeordnet sind, bestimmt.

3. Vorrichtung zur Durchführung des Verfahrens nach Anspruch 1, **dadurch gekennzeichnet, dass** die Thermoblechplatten (1) in
- einem oder mehreren quaderförmigen Thermoblechplattenmodulen (10) angeordnet sind, die jeweils aus zwei oder mehreren rechteckigen, parallel zueinander unter Freilassung jeweils eines Spaltes (2) angeordneten Thermoblechplatten (1) gebildet sind, dass
- die Thermoblechplattenmodule (10) mit einer druckentlastenden, überwiegend zylinderförmigen Hülle (11, 12, 13), umfassend einen Zylindermantel (11) und denselben an beiden Enden abschließenden Hauben (12, 13) und deren Längsachse parallel zur Ebene der Thermoblechplatten (1) ausgerichtet ist, vollständig umgeben sind, dass
- ein oder mehrere Abdichtelemente (14, 15) dergestalt angeordnet sind, dass das fluide Reaktionsgemisch außer durch die von den Hauben (12, 13) begrenzten Reaktorinnenräume nur durch die Spalte (2) strömt und dass
- jedes Thermoblechplattenmodul (10) mit einem oder mehreren voneinander unabhängigen Temperaturmesseinsätzen (4), bevorzugt mit zwei oder drei, besonders bevorzugt mit drei Temperaturmesseinsätzen (4) ausgestattet ist, und wobei die Temperaturmesseinsätze (4) in jeweils einer Hülse (3) im Spalt (2) angeordnet sind, die außerhalb des Reaktors mündet und jeweils 5 bis 60 Messstellen aufweisen.

4. Vorrichtung nach Anspruch 3, **dadurch gekennzeichnet, dass** die Hülse in Längsrichtung im Spalt (2) angeordnet ist.

5. Vorrichtung nach einem der Ansprüche 3 oder 4, **dadurch gekennzeichnet, dass** der Temperaturmesseinsatz (4) ein Mehrfachmesseinsatz, bevorzugt ein Multithermoelement ist.

6. Vorrichtung nach einem der Ansprüche 3 bis 5, **dadurch gekennzeichnet, dass** die Hülse ein bevorzugt metallisches Rohr ist, insbesondere mit einem Außendurchmesser im Bereich von 4 bis 15 mm, bevorzugt im Bereich von 6 bis 10 mm, besonders bevorzugt im Bereich von 6 bis 8 mm und weiter bevorzugt mit einer Wandstärke von 0,8 bis 1,5 mm, bevorzugt von 1 mm.

7. Vorrichtung nach einem der Ansprüche 3 bis 6, **dadurch gekennzeichnet, dass** die Hülse (3) eine oder mehrere Trennstellen innerhalb des Reaktorinnenraumes aufweist.

8. Vorrichtung nach einem der Ansprüche 3 bis 7, **dadurch gekennzeichnet, dass** die Messstellen des Temperaturmesseinsatzes (4) in Reaktorbereichen mit zu erwartenden Temperaturextrema und/oder besonders großer Temperaturgradienten mit geringerem Abstand zueinander angeordnet sind und in den übrigen Reaktorbereichen mit größerem Abstand zueinander angeordnet sind.

9. Vorrichtung nach einem der Ansprüche 3 bis 8, **dadurch gekennzeichnet, dass** die Hülse (3) die den Temperaturmesseinsatz (4) umhüllt, sowohl oberhalb als auch unterhalb des Reaktors mündet, dergestalt, dass der Temperaturmesseinsatz (4), der bevorzugt mit äquidistant angeordneten Messstellen ausgestattet ist, kontinuierlich in der Hülse (3) zur lückenlosen Messung des Temperaturprofils verschoben werden kann.

10. Vorrichtung nach einem der Ansprüche 3 bis 10, **dadurch gekennzeichnet, dass** der Temperaturmesseinsatz (4) 10 bis 50, besonders bevorzugt 15 bis 40 und weiter bevorzugt 20 bis 30 Messstellen aufweist.

11. Vorrichtung nach Anspruch 10, **dadurch gekennzeichnet, dass** der Temperaturmesseinsatz (4) 20 Messstellen und einen Außendurchmesser von etwa 3,8 mm aufweist und dass die Hülse (3) einen Außendurchmesser von 6 mm oder von 1/4 Zoll und einen Innendurchmesser von 4 mm oder von 5/32 Zoll aufweist.

12. Vorrichtung nach Anspruch 10, **dadurch gekennzeichnet, dass** der Temperaturmesseinsatz (4) 40 Messstellen und einen Außendurchmesser von etwa 2,5 mm aufweist und dass die Hülse (3) einen Außendurchmesser von 5 mm oder von 3/16 Zoll und einen Innendurchmesser von 3 mm oder von 1/8 Zoll aufweist.

13. Vorrichtung nach einem der Ansprüche 3 bis 12, **dadurch gekennzeichnet, dass** die Hülse (3) mittig in Längsrichtung im Spalt (2) angeordnet ist.

14. Vorrichtung nach einem der Ansprüche 3 bis 12, **dadurch gekennzeichnet, dass** die Hülse (3) an der seitlichen Begrenzung (6) des Spaltes (2) angeordnet ist.

15. Vorrichtung nach Anspruch 14, **dadurch gekennzeichnet, dass** zwischen der seitlichen Begrenzung (6) des Spaltes (2) und der Hülse (3) ein Isolierkörper vorgesehen ist, dass die Hülse (3) bevorzugt fest im Spalt (2) eingebaut ist und dass die Hülse (3) weiter bevorzugt einen Quadrat- oder Halbkreisquerschnitt aufweist.

16. Vorrichtung nach einem der Ansprüche 3 oder 5 bis 12, **dadurch gekennzeichnet, dass** die Hülse (3) horizontal im Spalt (2) angeordnet ist.

17. Vorrichtung zur Durchführung des Verfahrens nach Anspruch 2, **dadurch gekennzeichnet, dass** in einem oder mehreren Spalten (2) zusätzlich zu der in einem der Ansprüche 3 bis 16 definierten Vorrichtung jeweils eine Hülse (3) vorgesehen ist, die Perforationen (7) aufweist sowie mindestens ein Probenahmeröhrchen (8) zum Einführen in die Hülse (3), das in der Hülse (3) dergestalt angeordnet ist, dass das fluide Reaktionsgemisch über die Perforationen (7) in der Hülse (3) in das Probenahmeröhrchen (8) einströmt und aus dem Probenahmeröhrchen (8) außerhalb des Reaktors abgezogen und analysiert wird.

18. Vorrichtung nach Anspruch 17, **dadurch gekennzeichnet, dass** das Probenahmeröhrchen (8) mit der Hülse (3) fest verbunden ist, dergestalt, dass eine Öffnung des Probenahmeröhrchens (8) unmittelbar an einer Perforation (7) der Hülse (3) angeordnet ist.

19. Vorrichtung nach Anspruch 17, **dadurch gekennzeichnet, dass** das Probenahmeröhrchen (8) drehbar in der perforierten Hülse (3) angeordnet ist und zwei oder mehrere, über seine Mantelfläche versetzt angeordnete Öffnungen aufweist, dergestalt, dass das fluide Reaktionsgemisch stets nur über eine der Öffnungen in das Probenahmeröhrchen (8) einströmt.

20. Vorrichtung nach Anspruch 19, **dadurch gekennzeichnet, dass** die Öffnungen des Probenahmeröhrchens (8) als Schlitze in der Längsrichtung desselben ausgebildet sind.

21. Vorrichtung nach einem der Ansprüche 17 bis 20, **dadurch gekennzeichnet, dass** jedes Probenahmeröhrchen (8) zwei oder mehrere, bevorzugt 2 bis 4, voneinander getrennte Kammern aufweist, mit jeweils einer Öffnung, in die das fluide Reaktionsgemisch über die Perforationen (7) in der Hülse (3) einströmt und wobei das fluide Reaktionsgemisch aus jeder Kammer getrennt abgezogen und analysiert wird.

22. Vorrichtung nach Anspruch 21, **dadurch gekennzeichnet, dass** die Kammern nebeneinander oder konzentrisch zueinander angeordnet sind.

23. Vorrichtung nach Anspruch 20 oder 21, **dadurch gekennzeichnet, dass** das mehrere Kammern aufweisende Probenahmeröhrchen (8) um seine Längsachse drehbar ausgebildet ist.

24. Vorrichtung nach einem der Ansprüche 17 bis 23, **dadurch gekennzeichnet, dass** zwei oder mehrere Probenahmeröhrchen (8) vorgesehen sind, die jeweils fest mit der Hülse (3) verbunden sind, dergestalt, dass die Öffnung jedes Probenahmeröhrchens (8) unmittelbar an eine Perforation (7) der Hülse (3) angeordnet ist und wobei die einzelnen Probenahmeröhrchen (8) auf jeweils unterschiedlicher Höhe im Spalt (2) münden.

25. Vorrichtung nach Anspruch 17, **dadurch gekennzeichnet, dass** die Hülse (3) selbst als Probenahmeröhrchen (8) ausgebildet ist.

26. Verfahren zum Einbau einer Vorrichtung nach einem der Ansprüche 3 bis 16 und/oder nach einem der Ansprüche 17 bis 25 in einen Reaktor, **dadurch gekennzeichnet, dass** der Einbau der Vorrichtung(en) von derselben Seite des Reaktors erfolgt, wie die Zuführung des fluiden Reaktionsgemisches.

27. Verfahren nach Anspruch 26, **dadurch gekennzeichnet, dass** der Einbau der Vorrichtung(en) sowie die Zuführung des fluiden Reaktionsgemisches jeweils von oben in den Reaktor erfolgen und dass die Hülse (3) lediglich im oberen Bereich des Spaltes (2) Perforationen (7) aufweist, insbesondere bis etwa zur Mitte des Spaltes (2).

28. Verfahren nach Anspruch 26, **dadurch gekennzeichnet, dass** der Einbau der Vorrichtung(en) sowie die Zuführung des fluiden Reaktionsgemisches in den Reaktor jeweils von unten erfolgen und dass bevorzugt durch die Thermoblechplatten (1) ein Wärmeträger geleitet wird, der unter Reaktionsbedingungen partiell oder vollständig verdampft.

## Claims

1. A process for monitoring, controlling and/or regulating reactions of a fluid reaction mixture in the presence of a heterogeneous particulate catalyst, in a reactor having two or more thermoplates (1) arranged vertically and parallel to each other while in each case leaving a gap (2), the heterogeneous particulate catalyst being installed in the gaps (2) and the fluid reaction mixture being passed through the gaps (2), which comprises selecting as a monitoring, control and/or regulation parameter one or more temperatures which are measured in one or more gaps (2), at from 5 to 60 measurement points of a temperature measurement insert (4) which are distributed over the height of each gap (2), the temperature measurement insert (4) being disposed in the gap (2) in a sleeve (3) which opens outside the reactor.

2. The process according to claim 1, wherein the composition of the fluid reaction mixture in one or more gaps (2) is selected as a further monitoring, control and/or regulation parameter and is determined at one or more measurement points which are distributed over the height of each gap (2).

3. An apparatus for carrying out the process according to claim 1, wherein the thermoplates (1) are disposed in
- one or more cuboidal thermoplate modules (10) which are each formed from two or more rectangular thermoplates (1) arranged parallel to each other while in each case leaving a gap (2),
- the thermoplate modules (10) are completely surrounded by a pressure-releasing, predominantly cylindrical shell (11, 12, 13), comprising a cylinder jacket (11) and hoods (12, 13) which close it at both ends and whose longitudinal axis is aligned parallel to the plane of the thermoplates (1),
- one or more sealing elements (14, 15) are arranged in such a way that the fluid reaction mixture, apart from flowing through the reactor interiors bounded by the hoods (12, 13), only flows through the gaps (2), and
- each thermoplate module (10) having one or more mutually independent temperature measurement inserts (4) is equipped preferably with two or three, more preferably with three, temperature measurement inserts (4), and the temperature measurement inserts (4) are each disposed in the gap (2) in a sleeve (3) which opens outside the reactor, and each have from 5 to 60 measurement points.

4. The apparatus according to claim 3, wherein the sleeve is arranged in the gap (2) in the longitudinal direction.

5. The apparatus according to one of claims 3 and 4, wherein the temperature measurement insert (4) is a multiple measurement insert, preferably a multithermocouple.

6. The apparatus according to any of claims 3 to 5, wherein the sleeve is a preferably metallic tube, especially having an external diameter in the range from 4 to 15 mm, preferably in the range from 6 to 10 mm, more preferably in the range from 6 to 8 mm, and further preferably having a wall thickness of from 0.8 to 1.5 mm, preferably of 1 mm.

7. The apparatus according to any of claims 3 to 6, wherein the sleeve (3) has one or more disconnection points within the reactor interior.

8. The apparatus according to any of claims 3 to 7, wherein the measurement points of the temperature measurement insert (4) are arranged with a relatively small separation from each other in reactor regions having expected temperature extremes and/or particularly large temperature gradients, and with a relatively large separation from each other in the remaining reactor regions.

9. The apparatus according to any of claims 3 to 8, wherein the sleeve (3) which encloses the temperature measurement insert (4) opens both above and below the reactor, in such a way that the temperature measurement insert (4) which is preferably equipped with equidistant measurement points can be shifted continuously in the sleeve (3) for uninterrupted measurement of the temperature profile.

10. The apparatus according to any of claims 3 to 10, wherein the temperature measurement insert (4) has from 10 to 50, more preferably from 15 to 40 and still more preferably from 20 to 30, measurement points.

11. The apparatus according to claim 10, wherein the temperature measurement insert (4) has 20 measurement points and an external diameter of about 3.8 mm, and the sleeve (3) has an external diameter of 6 mm or of 1/4 inch and an internal diameter of 4 mm or of 5/32 inch.

12. The apparatus according to claim 10, wherein the temperature measurement insert (4) has 40 measurement points and an external diameter of about 2.5 mm, and the sleeve (3) has an external diameter of 5 mm or of 3/16 inch and an internal diameter of 3 mm or of 1/8 inch.

13. The apparatus according to any of claims 3 to 12, wherein the sleeve (3) is disposed in the gap (2) centrally in the longitudinal direction.

14. The apparatus according to any of claims 3 to 12, wherein the sleeve (3) is disposed at the lateral boundary (6) of the gap (2).

15. The apparatus according to claim 14, wherein an insulating element is provided between the lateral boundary (6) of the gap (2) and the sleeve (3), the sleeve (3) is preferably installed in the gap (2) in a fixed manner, and the sleeve (3) more preferably has a square or semicircular cross section.

16. The apparatus according to any of claims 3 or 5 to 12, wherein the sleeve (3) is disposed in the gap (2) horizontally.

17. An apparatus for carrying out the process according to claim 2, wherein, in addition to the apparatus defined in any of claims 3 to 16, in each case one sleeve (3) is provided in one or more gaps (2) and has perforations (7) and also at least one sampling tube (8) for introduction into the sleeve (3), said sampling tube being disposed in the sleeve (3) in such a way that the fluid reaction mixture flows through the perforations (7) in the sleeve (3) into the sampling tube (8) and is removed from the sampling tube (8) outside the reactor and analyzed.

18. The apparatus according to claim 17, wherein the sampling tube (8) is connected in a fixed manner to the sleeve (3) in such a way that an orifice of the sampling tube (8) is disposed directly on a perforation (7) of the sleeve (3).

19. The apparatus according to claim 17, wherein the sampling tube (8) is disposed in the perforated sleeve (3) in a rotatable manner and has two or more orifices disposed over its jacket surface offset in such a way that the fluid reaction mixture always flows into the sampling tube (8) only through one of the orifices.

20. The apparatus according to claim 19, wherein the orifices of the sampling tube (8) are designed as slots in the longitudinal direction thereof.

21. The apparatus according to any of claims 17 to 20, wherein each sampling tube (8) has two or more, preferably from 2 to 4, mutually separate chambers, each having an orifice into which the fluid reaction mixture flows through the perforations (7) in the sleeve (3), and the fluid reaction mixture is removed separately from each chamber and analyzed.

22. The apparatus according to claim 21, wherein the chambers are arranged mutually adjacently or concentrically.

23. The apparatus according to claim 20 or 21, wherein the sampling tube (8) having a plurality of chambers is designed to be rotatable about its longitudinal axis.

24. The apparatus according to any of claims 17 to 23, wherein two or more sampling tubes (8) are provided and are each connected in a fixed manner to the sleeve (3) in such a way that the orifice of each sampling tube (8) is disposed directly on a perforation (7) of the sleeve (3), and the individual sampling tubes (8) open in the gap (2) each at a different height.

25. The apparatus according to claim 17, wherein the sleeve (3) is itself designed as a sampling tube (8).

26. A process for incorporating an apparatus according to any of claims 3 to 16 and/or according to any of claims 17 to 25 into a reactor, wherein the apparatus(es) is/are installed from the same side of the reactor as the feed of the fluid reaction mixture.

27. The process according to claim 26, wherein the apparatus(es) is/are installed and the fluid reaction mixture is fed into the reactor in each case from above, and the sleeve (3) has perforations (7) only in the upper region of the gap (2), especially up to about the midpoint of the gap (2).

28. The process according to claim 26, wherein the apparatus(es) is/are installed and the fluid reaction mixture is fed into the reactor in each case from below, and a heat carrier is preferably passed through the thermoplates (1) and partially or fully evaporates under reaction conditions.

## Revendications

1. Procédé pour surveiller, commander et/ou réguler des réactions d'un mélange réactionnel fluide en présence d'un catalyseur particulaire hétérogène dans un réacteur présentant deux plaques (1) en tôle thermique ou plus, disposées verticalement, parallèlement les unes aux autres en laissant à chaque fois une fente (2), le catalyseur particulaire hétérogène étant introduit dans les fentes (2) et le mélange réactionnel fluide étant guidé à travers les fentes (2), **caractérisé en ce qu'**on choisit comme grandeurs de surveillance, de commande et/ou de régulation une ou plusieurs valeurs de température, qui sont mesurées dans une ou plusieurs fentes (2), en 5 à 60 sites de mesure d'un insert de mesure de la température (4) qui sont répartis sur la hauteur de chaque fente (2), l'insert de mesure de la température (4) étant disposé dans un manchon (3) dans la fente (2) qui débouche en dehors du réacteur.

2. Procédé selon la revendication 1, **caractérisé en ce qu'**on choisit comme autre grandeur de surveillance, de commande et/ou de régulation la composition du mélange réactionnel fluide dans une ou plusieurs fentes (2), qu'on détermine en un ou plusieurs sites de mesure qui sont répartis sur la hauteur de chaque fente (2).

3. Dispositif pour réaliser le procédé selon la revendication 1, **caractérisé en ce que** les plaques (1) en tôle thermique sont
- disposées dans un ou plusieurs modules (10) à plaques en tôle thermique parallélépipédiques, qui sont formés à chaque fois à partir de deux plaques (1) en tôle thermique ou plus, rectangulaires, disposées parallèlement les unes aux autres en laissant à chaque fois une fente (2), **en ce que**
- les modules (10) à plaques en tôle thermique sont complètement entourés par une enveloppe (11, 12, 13) éliminant la pression, principalement cylindrique, comprenant une enveloppe cylindrique (11) et des capots (12, 13) qui la ferment aux deux extrémités et dont l'axe longitudinal est orienté parallèlement au plan des plaques (1) en tôle thermique, **en ce que**
- un ou plusieurs éléments d'étanchéité (14, 15) sont disposés de manière telle que le mélange réactionnel fluide, en plus de s'écouler à travers les chambres internes du réacteur délimitées par les capots (12, 13), s'écoule uniquement à travers les fentes (2) et **en ce que**
- chaque module (10) à plaques en tôle thermique est équipé d'un ou de plusieurs inserts de mesure de la température (4) indépendants les uns des autres, de préférence de deux ou trois, de manière particulièrement préférée de trois inserts de mesure de la température (4), et les inserts de mesure de la température (4) sont disposés à chaque fois dans un manchon (3) dans une fente (2), qui débouche en dehors du réacteur, et présentent à chaque fois 5 à 60 sites de mesure.

4. Dispositif selon la revendication 3, **caractérisé en ce que** le manchon est disposé dans le sens longitudinal dans la fente (2).

5. Dispositif selon l'une quelconque des revendications 3 ou 4, **caractérisé en ce que** l'insert de mesure de la température (4) est un insert de mesure multiple, de préférence un thermoélément multi-étages.

6. Dispositif selon l'une quelconque des revendications 3 à 5, **caractérisé en ce que** le manchon est de préférence un tube métallique, présentant en particulier un diamètre externe dans la plage de 4 à 15 mm, de préférence dans la plage de 6 à 10 mm, de manière particulièrement préférée dans la plage de 6 à 8 mm et présentant également de préférence une épaisseur de paroi de 0,8 à 1,5 mm, de préférence de 1 mm.

7. Dispositif selon l'une quelconque des revendications 3 à 6, **caractérisé en ce que** le manchon (3) présente un ou plusieurs sites de séparation dans la chambre interne du réacteur.

8. Dispositif selon l'une quelconque des revendications 3 à 7, **caractérisé en ce que** les sites de mesure de l'insert de mesure de la température (4) sont disposés à une faible distance les uns des autres dans des zones de réacteur dans lesquelles on attend des extrêmes de température et/ou des gradients de température particulièrement importants et à une plus grande distance les uns des autres dans les autres zones du réacteur.

9. Dispositif selon l'une quelconque des revendications 3 à 8, **caractérisé en ce que** le manchon (3) enveloppe l'insert de mesure de la température (4), débouche tant au-dessus qu'en dessous du réacteur, de manière telle que l'insert de mesure de la température (4), qui est de préférence doté de sites de mesure disposés de manière équidistante, peut être déplacé en continu dans le manchon (3) pour une mesure sans lacune du profil de la température.

10. Dispositif selon l'une quelconque des revendications 3 à 10, **caractérisé en ce que** l'insert de mesure de la température (4) présente 10 à 50, de manière particulièrement préférée 15 à 40 et plus préférablement 20 à 30 sites de mesure.

11. Dispositif selon la revendication 10, **caractérisé en ce que** l'insert de mesure de la température (4) présente 20 sites de mesure et un diamètre externe d'environ 3,8 mm et **en ce que** le manchon (3) présente un diamètre externe de 6 mm ou de 1/4 de pouce et un diamètre interne de 4 mm ou de 5/32 de pouce.

12. Dispositif selon la revendication 10, **caractérisé en ce que** l'insert de mesure de la température (4) présente 40 sites de mesure et un diamètre externe d'environ 2,5 mm et **en ce que** le manchon (3) présente un diamètre externe de 5 mm ou de 3/16 de pouce et un diamètre interne de 3 mm ou de 1/8 de pouce.

13. Dispositif selon l'une quelconque des revendications 3 à 12, **caractérisé en ce que** le manchon (3) est disposé au centre dans le sens longitudinal dans la fente (2).

14. Dispositif selon l'une quelconque des revendications 3 à 12, **caractérisé en ce que** le manchon (3) est disposé le long de la limite latérale (6) de la fente (2).

15. Dispositif selon la revendication 14, **caractérisé en ce qu'**un corps isolant est prévu entre la limite latérale (6) de la fente (2) et le manchon (3), **en ce que** le manchon (3) est de préférence monté de manière fixe dans la fente (2) et **en ce que** le manchon (3) présente en outre de préférence une section carrée ou semi-circulaire.

16. Dispositif selon l'une quelconque des revendications 3 ou 5 à 12, **caractérisé en ce que** le manchon (3) est disposé horizontalement dans la fente (2).

17. Dispositif pour réaliser le procédé selon la revendication 2, **caractérisé en ce qu'**on a prévu dans une ou plusieurs fentes (2), en plus du dispositif défini dans l'une quelconque des revendications 3 à 16 à chaque fois un manchon (3), qui présente des perforations (7) ainsi qu'au moins un tube (8) de prélèvement d'échantillon à introduire dans le manchon (3), qui est disposé dans le manchon (3) de manière telle que le mélange réactionnel fluide s'écoule via les perforations (7) du manchon (3) dans le tube (8) de prélèvement d'échantillon et est soutiré du tube (8) de prélèvement d'échantillon en dehors du réacteur et est analysé.

18. Dispositif selon la revendication 17, **caractérisé en ce que** le tube (8) de prélèvement d'échantillon est relié de manière fixe au manchon (3), de manière telle qu'une ouverture du tube (8) de prélèvement d'échantillon est disposée directement au niveau d'une perforation (7) du manchon (3).

19. Dispositif selon la revendication 17, **caractérisé en ce que** le tube (8) de prélèvement d'échantillon est disposé de manière à pouvoir tourner dans le manchon perforé (3) et présente deux ouvertures ou plus, disposées de manière décalée sur sa surface enveloppante, de manière telle que le mélange réactionnel fluide ne s'écoule à chaque fois que via une des ouvertures dans le tube (8) de prélèvement d'échantillon.

20. Dispositif selon la revendication 19, **caractérisé en ce que** les ouvertures du tube (8) de prélèvement d'échantillon sont réalisées sous forme de fentes dans la direction longitudinale de celui-ci.

21. Dispositif selon l'une quelconque des revendications 17 à 20, **caractérisé en ce que** chaque tube (8) de prélèvement d'échantillon présente deux chambres séparées l'une de l'autre ou plus, de préférence 2 à 4, présentant à chaque fois une ouverture dans laquelle le mélange réactionnel fluide s'écoule, via les perforations (7), dans le manchon (3) et le mélange réactionnel fluide étant soutiré de chaque chambre séparément et analysé.

22. Dispositif selon la revendication 21, **caractérisé en ce que** les chambres sont disposées les unes à côté des autres ou concentriquement les unes par rapport aux autres.

23. Dispositif selon la revendication 20 ou 21, **caractérisé en ce que** le tube (8) de prélèvement d'échantillon présentant plusieurs chambres est réalisé de manière à pouvoir tourner autour de son axe longitudinal.

24. Dispositif selon l'une quelconque des revendications 17 à 23, **caractérisé en ce que** deux tubes (8) de prélèvement d'échantillon ou plus sont prévus, qui sont à chaque fois reliés de manière fixe au manchon (3), de manière telle que l'ouverture de chaque tube (8) de prélèvement d'échantillon est disposée directement au niveau d'une perforation (7) du manchon (3) et les différents tubes (8) de prélèvement d'échantillon débouchant à une hauteur à chaque fois différente dans la fente (2).

25. Dispositif selon la revendication 17, **caractérisé en ce que** le manchon (3) est lui-même réalisé comme tube (8) de prélèvement d'échantillon.

26. Procédé pour le montage d'un dispositif selon l'une quelconque des revendications 3 à 16 et/ou selon l'une quelconque des revendications 17 à 25 dans un réacteur, **caractérisé en ce que** le montage du ou des dispositifs a lieu du même côté du réacteur que l'alimentation du mélange réactionnel fluide.

27. Procédé selon la revendication 26, **caractérisé en ce que** le montage du ou des dispositifs ainsi que l'alimentation du mélange réactionnel fluide ont à chaque fois lieu à partir du haut dans le réacteur et **en ce que** le manchon (3) ne présente des perforations (7) que dans la zone supérieure de la fente (2), en particulier jusqu'environ le milieu de la fente (2).

28. Procédé selon la revendication 26, **caractérisé en ce que** le montage du ou des dispositifs ainsi que l'alimentation du mélange réactionnel fluide dans le réacteur ont à chaque fois lieu à partir du bas et **en ce qu'**un caloporteur, qui s'évapore partiellement ou complètement dans les conditions de réaction, est de préférence guidé à travers les plaques (1) en tôle thermique.
